# EUROPÄISCHE PATENTSCHRIFT

(11) **EP 1 460 259 B1**
(45) Veröffentlichungstag und Bekanntmachung des Hinweises auf die Patenterteilung: **17.05.2006**
(21) Anmeldenummer: 04006296.0
(22) Anmeldetag: 17.03.2004
(51) Int. Cl.: F02K 9/97

(54) **Ausfahrbare Schubdüsenglocke für ein Raketentriebwerk**
Deployable rocket engine nozzle
Tuyère déployable d'un moteur de fusée

(30) Priorität: 20.03.2003 DE 10312419
(43) Veröffentlichungstag der Anmeldung: 22.09.2004
(73) Patentinhaber: EADS Space Transportation GmbH, 28199 Bremen (DE)
(72) Erfinder: Kretschmer, Joachim, 82340 Feldafing (DE)
(74) Vertreter: Ulrich, Thomas

(56) Entgegenhaltungen:
- US-A- 3 596 465
- US-A- 4 426 038
- US-A- 4 638 947
- US-A- 4 706 886

## Beschreibung

Die Erfindung betrifft ein Raketentriebwerk eines Luft- oder Raumfahrzeugs mit einer ausfahrbaren Schubdüsenglocke nach dem Oberbegriff des Anspruchs 1.

Aus der US 4 706 886 ist eine ausfahrbare Schubdüsenglocke für ein Raketentriebwerk bekannt, welche einen am Motor des Raketentriebwerks fest angeordneten ersten Teil mit kleinerem Durchmesser und einen gegenüber dem ersten Teil beweglich angeordneten zweiten Teil mit größerem Durchmesser umfasst, wobei der zweite Teil in einer (bezüglich der Flugrichtung des Luft- oder Raumfahrzeugs) vorderen Stauposition den ersten Teil umgebend näher am Raketenmotor befindlich ist und in einer (bezüglich der Flugrichtung) hinteren Betriebsposition den ersten Teil fortsetzend weiter vom Raketenmotor weg angeordnet ist. Ein durch ein gasförmiges Fluid beaufschlagbares geschlossenes Volumen bewirkt bei Beaufschlagung mit dem gasförmigen Fluid unter Volumenvergrößerung ein Ausfahren des zweiten Teils der Schubdüsenglocke aus der Stauposition in die Betriebsposition. Dieses geschlossene Volumen ist bei der bekannten Schubdüsenglocke durch einen im wesentlichen zylindrischen Balg mit einem kreisringförmigen Querschnitt vorgesehen, der innerhalb der Schubdüsenglocke angeordnet ist. Dieser Balg ist in der Stauposition flach zusammengefaltet und wird bei Beaufschlagung mit dem gasförmigen Fluid in Axialrichtung des Raketentriebwerks entfaltet und bewirkt dadurch ein Ausfahren des zweiten Teils der Schubdüsenglocke aus der Stauposition in die Betriebsposition. Nach dem Erreichen der Betriebsposition, in welcher der zweite Teil der Schubdüsenglocke durch einen Verriegelungsmechanismus an dem ersten Teil der Schubdüsenglocke verriegelt worden ist, wird der Balg mittels entsprechender eigens dafür vorgesehener Freigabemechanismen aus dem zweiten Teil der Schubdüsenglocke freigegeben und abgeworfen. Nachteilig bei der bekannten ausfahrbaren Schubdüsenglocke ist ein verhältnismäßig komplizierter Aufbau des Balges und der besagten Freigabemechanismen, was mit einem hohen Gewicht verbunden ist. Weiterhin besteht wegen des komplizierten Aufbaus eine gewisse Gefahr für eine fehlerhafte Funktion.

Die Aufgabe der Erfindung ist es ein Raketentriebwerk mit einer ausfahrbaren Schubdüsenglocke der vorausgesetzten Art zu schaffen, welche mit wenigen Bauteilen einfach und robust mechanisch aufgebaut ist und ein geringes Geweicht aufweist.

Diese Aufgabe wird erfindungsgemäß durch ein Raketentriebwerk mit den Merkmalen des Anspruchs 1 gelöst.

Vorteilhafte Weiterbildungen und Ausführungsformen der erfindungsgemäßen ausfahrbaren Schubdüsenglocke sind in den Unteransprüchen gekennzeichnet.

Ein Vorteil des erfindungsgemäßen Raketentriebwerks mit ausfahrbaren Schubdüsenglocke ist eine große Zuverlässigkeit der Funktion aufgrund der Betätigung mit einem gasförmigen Fluid, das aus einer vorhandenen Druckgasversorgung (Purge) entnommen werden kann. Ein weiterer Vorteil ist es, dass hohe Ausfahr- und Zentrierkräfte aufgebracht werden können durch großflächige Druckbeaufschlagung, wodurch große Seitenkräfte und Manöverkräfte ertragbar sind.

Gemäß einer bevorzugten Ausführungsform umfasst die Rollbalganordnung mindestens einen im wesentlichen rotationssymmetrisch bezüglich der Längsachse des Raketentriebwerks ausgebildeten Rollbalg.

Vorzugsweise ist der mindestens eine Rollbalg über den ganzen Umfang der Schubdüsenglocke umlaufend ausgebildet. Ein Vorteil hiervon ist eine großflächige Krafteinleitung mit Zentrierfunktion durch den Rollbalg auf die Schubdüsenglocke.

Gemäß einer bevorzugten Ausführungsform der Erfindung umfasst die Rollbalganordnung einen ersten Rollbalg, der eine Abdichtung für das gasförmige Fluid bildend einerseits mit einem Umfangsbereich des ersten Teils der Schubdüsenglocke oder einem anderen feststehenden Teil des Luft- oder Raumfahrzeugs und andererseits mit einem Umfangsbereich des zweiten Teils der Schubdüsenglocke verbunden ist, sowie einen zweiten Balg, der eine weitere Abdichtung des von dem ersten Rollbalg begrenzten Volumens für das gasförmige Fluid bildet.

Hierbei kann gemäß einer bevorzugten Ausführungsform der Erfindung der zweite Balg ein Verschlussbalg sein, der die Strahlöffnung des zweiten Teils der Schubdüsenglocke verschließt und zusammen mit dem ersten Rollbalg und dem ersten und zweiten Teil der Schubdüsenglocke das von dem gasförmigen Fluid beaufschlagbare geschlossene Volumen innerhalb der Schubdüsenglocke begrenzt.

Bei dieser letztgenannten Ausführungsform kann es vorzugsweise vorgesehen werden, dass der Umfangsbereich des ersten Teils der Schubdüsenglocke, mit dem der erste Rollbalg einerseits verbunden ist, am rückwärtigen Ende des ersten Teils der Schubdüsenglocke vorgesehen ist, und dass der Umfangsbereich des zweiten Teils der Schubdüsenglocke, mit dem der erste Rollbalg andererseits verbunden ist, am vorderen Ende des zweiten Teils der Schubdüsenglocke vorgesehen ist.

Bei diesen Ausführungsformen, bei denen das von dem gasförmigen Fluid beaufschlagbare geschlossene Volumen innerhalb der Schubdüsenglocke gegrenzt ist, ist vorzugsweise eine Sollbruchstelle in dem Verschlussbalg vorgesehen, an der der Verschlussbalg nach dem Ausfahren des zweiten Teils der Schubdüsenglocke in die Betriebsposition aufplatzt, um die Strahlöffnung freizugeben. Der aufgeplatzte Verschlussbalg wird dann nach Zündung des Raketentriebwerks durch Verbrennen oder Abschmelzen völlig abgetrennt und/oder entfernt.

Gemäß einer anderen Ausführungsform der Erfindung ist es vorgesehen, dass der zweite Balg ein zweiter Rollbalg ist, der einerseits mit einem feststehenden Teil des Luft- oder Raumfahrzeugs, ggf. auch in Form des ersten Teils der Schubdüsenglocke selbst, und andererseits mit einem Umfangsbereich des zweiten Teils der Schubdüsenglocke verbunden ist und eine bezüglich dem ersten Rollbalg zumindest teilweise radial außerhalb liegende weitere Abdichtung für das gasförmige Fluid bildet, wobei das von dem gasförmigen Fluid beaufschlagbare geschlossene Volumen sich zumindest teilweise außerhalb der Schubdüsenglocke befindet und zwischen dem ersten Rollbalg und dem zweiten Rollbalg begrenzt ist.

Bei dieser Ausführungsform kann der Umfangsbereich des zweiten Teils der Schubdüsenglocke, mit dem der zweite Rollbalg verbunden ist, im wesentlichen der gleiche Umfangsbereich sein, mit dem auch der erste Rollbalg verbunden ist.

Alternativ kann es vorgesehen sein, dass der Umfangsbereich des zweiten Teils der Schubdüsenglocke, mit dem der zweite Rollbalg verbunden ist, ein anderer als der Umfangsbereich ist, mit welchem der erste Rollbalg verbunden ist, und sich radial außerhalb und rückwärts des letzteren befindet.

Gemäß einer bevorzugten Weiterbildung aller Ausführungsformen der erfindungsgemäßen Schubdüsenglocke kann eine Rückhalteeinrichtung zum Abbremsen der Bewegung beim Ausfahren des zweiten Teils der Schubdüsenglocke aus der Stauposition in die Betriebsposition vorgesehen sein.

Diese Rückhalteeinrichtung kann gleichzeitig zum Zentrieren des zweiten Teils der Schubdüsenglocke beim Ausfahren aus der Stauposition in die Betriebsposition dienen.

Gemäß einer Ausführungsform der Erfindung kann die Rückhalteeinrichtung ein oder mehrere sich zwischen dem zweiten Teil der Schubdüsenglocke und einem feststehenden Teil des Luft- oder Raumfahrzeugs, ggf. auch in Form des ersten Teils der Schubdüsenglocke selbst, erstreckende und mit einer Kabelbremse gekoppelte Rückhaltekabel umfassen.

Alternativ oder zusätzlich zu den letztgenannten Ausführungsformen kann die Rückhalteeinrichtung einen Rückhaltebalg umfassen, der sich zwischen einem Umfangsbereich des ersten Teils der Schubdüsenglocke und einem Umfangsbereich des zweiten Teils der Schubdüsenglocke erstreckt und bezüglich dem ersten Rollbalg vorne liegend angeordnet ist und zusammen mit dem ersten Rollbalg ein weiteres mit einem gasförmigen Fluid beaufschlagbares geschlossenes Volumen bildet, das bei Beaufschlagung mit dem gasförmigen Fluid unter Volumenvergrößerung ein Abbremsen der Bewegung beim Ausfahren des zweiten Teils der Schubdüsenglocke aus der Stauposition in die Betriebsposition bewirkt.

Hierbei kann es vorzugsweise vorgesehen sein, dass der Rückhaltebalg an einem Umfangsbereich des zweiten Teils der Schubdüsenglocke festgelegt ist, der sich radial außerhalb des Umfangsbereich befindet, mit dem der erste Rollbalg verbunden ist.

Hierbei ist insbesondere vorgesehen, dass der Rückhaltebalg zwischen dem ersten Rollbalg und dem zweiten Rollbalg, also innerhalb des zwischen dem ersten Rollbalg und dem zweiten Rollbalg begrenzten geschlossenen Volumens angeordnet ist.

Gemäß einer anderen bevorzugten Ausführungsform der Erfindung kann die Rückhalteeinrichtung einen sich zwischen einem vorderen Umfangsbereich des ersten Teils und einem vorderen Umfangsbereich des zweiten Teils der Schubdüsenglocke erstreckenden Rückhalte- und Zentrierbalg umfassen.

Alternativ oder zusätzlich kann die Rückhalteeinrichtung einen sich zwischen dem hinteren Umfangsbereich des ersten Teils und einem hinteren Umfangsbereich des zweiten Teils der Schubdüsenglocke erstreckenden Rückhalte- und Zentrierbalg umfassen.

Bei den beiden letztgenannten Ausführungsformen ist der Rückhalte- und Zentrierbalg vorzugsweise so ausgebildet, dass er beim Ausfahren des zweiten Teils der Schubdüsenglocke aus der Stauposition in die Betriebsposition nach einer gewissen Wegstrecke der Ausfahrbewegung, spätestens nach dem Erreichen der Betriebsposition des zweiten Teils der Schubdüsenglocke platzt oder getrennt wird, beispielsweise durch eine Sollbruchstelle.

Im folgenden werden Ausführungsbeispiele der Erfindung anhand der Zeichnung erläutert. Es zeigt:
- Figur 1a) und b): eine etwas schematisierte, teilweise geschnittene Seitenansicht eines Raketentriebwerks mit einer ausfahrbaren Schubdüsenglocke nach einem ersten Ausführungsbeispiel der Erfindung;
- Figur 2a) und b): eine etwas schematisierte, teilweise geschnittene Seitenansicht eines Raketentriebwerks mit einer ausfahrbaren Schubdüsenglocke nach einem zweiten Ausführungsbeispiel der Erfindung;
- Figur 3a) und b): eine etwas schematisierte, teilweise geschnittene Seitenansicht eines Raketentriebwerks mit einer ausfahrbaren Schubdüsenglocke nach einem dritten Ausführungsbeispiel der Erfindung; und
- Figur 4a) und b): eine etwas schematisierte, teilweise geschnittene Seitenansicht eines Raketentriebwerks mit einer ausfahrbaren Schubdüsenglocke nach einem vierten Ausführungsbeispiel der Erfindung.

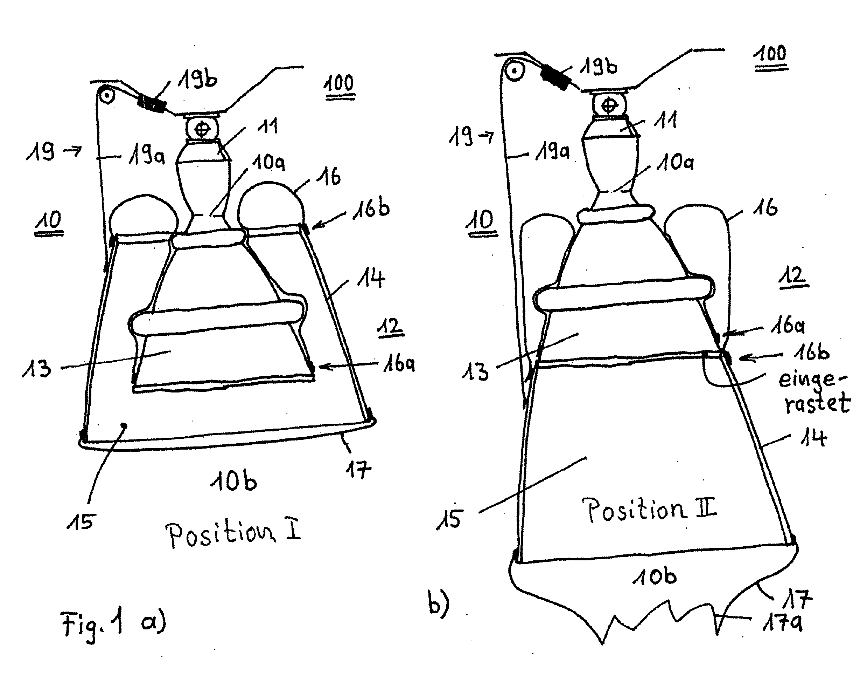

Bei den in den Figuren 1 bis 4 dargestellten Ausführungsbeispielen einer ausfahrbaren Schubdüsenglocke für ein Raketentriebwerk eines Luft- oder Raumfahrzeugs, bedeutet das Bezugszeichen 100; 200; 300; 400 einen rückwärtigen, also in Flugrichtung des Luft- oder Raumfahrzeugs hinten liegenden Bereich desselben, an welchem ein Motor 11; 21; 31; 41 des Raketentriebwerks angeordnet ist, welches insgesamt mit dem Bezugszeichen 10; 20; 30; 40 versehen ist. An dem Motor 11; 21; 31; 41 ist eine ausfahrbare Schubdüsenglocke 12; 22; 32; 42 angeordnet. Diese dient in bekannter Weise dazu, die von dem Motor 11; 21; 31; 41 des Raketentriebwerks 10; 20; 30; 40 mit hoher Geschwindigkeit nach rückwärts ausströmenden Brenngase in kontrollierter Weise so zu expandieren, dass ihre Geschwindigkeit im Sinne einer maximalen Impulsübertragung auf das Luft- oder Raumfahrzeug zum Zwecke dessen Vortriebs herabgesetzt ist. Hierzu ist ein beträchtliches Expansionsverhältnis zwischen dem Düsenquerschnitt 10a; 20a; 30a; 40a, an welchem die Brenngase von dem Motor 11; 21; 31; 41 in die Schubdüsenglocke 12; 22; 32; 42 an deren vorderem Ende eintreten, und der Querschnittsfläche der Strahlöffnung 10b am rückwärtigen Ende der Schubdüsenglocke 12; 22; 32; 42, an welchem die Brenngase austreten, erforderlich. Dies bedeutet unter Berücksichtigung einer optimalen Kurvenform der Schubdüsenglocke 12; 22; 32; 42 eine beträchtliche Länge derselben. Damit der Raumbedarf für die Schubdüsenglocke 12; 22; 32; 42 in Grenzen gehalten wird, ist diese daher in geteilter und ausfahrbarer Form vorgesehen. Nämlich umfasst die Schubdüsenglocke 12; 22; 32; 42 einen am Motor 11; 21; 31; 41 des Raketentriebwerks 10; 20; 30; 40 fest angeordneten ersten Teil 13; 23; 33; 43 mit einem kleineren Durchmesser und einen gegenüber dem ersten Teil 13; 23; 33; 43 beweglich angeordneten zweiten Teil 14; 24; 34; 44 mit größerem Durchmesser.

Der zweite Teil 14; 24; 34; 44 der Schubdüsenglocke 12; 22; 32; 42 ist in einer vorderen Stauposition I, die jeweils in den Figuren 1a), 2a), 3a) und 4a) dargestellt ist, den ersten Teil 13; 23; 33; 43 der Schubdüsenglocke 12; 22; 32; 42 umgebend näher am Raketenmotor 11; 21; 31; 41 befindlich und in einer hinteren Betriebsposition II, die in den Figuren 1b), 2b), 3b) und 4b) dargestellt ist, den ersten Teil 13; 23; 33; 43 der Schubdüsenglocke 12; 22; 32; 42 fortsetzend weiter vom Raketenmotor 11; 21; 31; 41, also weiter hinten angeordnet. In dieser hinteren Betriebsposition II ist der zweite Teil 14; 24; 34; 44 der Schubdüsenglocke 12; 22; 32; 42 mittels eines geeigneten Verriegelungsmechanismus, beispielsweise eines einrastbaren Federmechanismus, festverriegelbar, der in den Figuren jedoch nicht eigens dargestellt ist.

Zum Ausfahren des zweiten Teils 14; 24; 34; 44 der Schubdüsenglocke 12; 22; 32; 42 aus der Stauposition I in die Betriebsposition II ist ein durch ein gasförmiges Fluid beaufschlagbares geschlossenes Volumen 15; 25; 35; 45 vorgesehen, welches bei Beaufschlagung mit dem gasförmigen Fluid unter Volumenvergrößerung das Ausfahren des zweiten Teils 14; 24; 34; 44 bewirkt.

Allgemein ist dieses durch das gasförmige Fluid beaufschlagbare geschlossene Volumen 15; 25; 35; 45 zumindest teilweise durch eine zwischen den beweglich angeordneten zweiten Teil 14; 24; 34; 44 der Schubdüsenglocke 12; 22; 32; 42 und einen feststehenden Teil des Raketentriebwerks 10; 20; 30; 40 oder des Luft- oder Raumfahrzeugs 100; 200; 300; 400 gekoppelte verformbare Rollbalganordnung 16; 26, 28; 36, 38, 39; 46, 48 gebildet. Bei den in den Figuren 1 bis 4 dargestellten Ausführungsbeispielen enthält die Rollbalganordnung mindestens einen Rollbalg 16; 26, 28; 36, 38, 39; 46, 48, der im wesentlichen rotationssymmetrisch bezüglich der Längsachse des Raketentriebwerks 10; 20; 30; 40 ausgebildet ist und über den ganzen Umfang der Schubdüsenglocke 12; 22; 32; 42, also über 360° umlaufend ausgebildet ist. Der Rollbalg 16; 26, 28; 36, 38, 39; 46, 48 wie auch evtl. weitere Rollbalge der Rollbalganordnung werden beim Ausfahren gestreckt und entsprechend ausgerollt.

Bei dem in den Figuren 1a) und b) dargestellten ersten Ausführungsbeispiel der erfindungsgemäßen ausfahrbaren Schubdüsenglocke umfasst die Rollbalganordnung einen ersten Rollbalg 16, der einerseits mit einem Umfangsbereich 16a des ersten Teils 13 der Schubdüsenglocke 12 und andererseits mit einem Umfangsbereich 16b des zweiten Teils 14 der Schubdüsenglocke 12 verbunden ist, wobei der Umfangsbereich 16a des ersten Teils 13, mit dem der erste Rollbalg 16 einerseits verbunden ist, am rückwärtigen Ende des ersten Teils 13 vorgesehen ist und der Umfangsbereich 16b des zweiten Teils 14, mit dem der erste Rollbalg 16 andererseits verbunden ist, sich am vorderen Ende des zweiten Teils 14 befindet.

Weiterhin ist ein zweiter Balg in Form eines Verschlussbalges 17 vorgesehen, der die Strahlöffnung 10b am rückwärtigen Ende des zweiten Teils 14 der Schubdüsenglocke 12 verschließt und zusammen mit dem ersten Rollbalg 16 und dem ersten und zweiten Teil 13, 14 der Schubdüsenglocke 12 das von dem gasförmigen Fluid beaufschlagbare geschlossene Volumen 15 innerhalb der Schubdüsenglocke 12 begrenzt.

Weiterhin ist eine Rückhalteeinrichtung 19 vorgesehen, die zum Abbremsen der Bewegung beim Ausfahren des zweiten Teils 14 der Schubdüsenglocke 12 aus der Stauposition I in die Betriebsposition II dient und ein oder vorzugsweise mehrere über den Umfang der Schubdüsenglocke 12 verteilte, sich zwischen dem zweiten Teil 14 der Schubdüsenglocke 12 und einem feststehenden Teil des Luft- oder Raumfahrzeugs 100 erstreckende Rückhaltekabel 19a und eine Kabelbremse 19b umfasst, mit der die Rückhaltekabel 19a gekoppelt sind.

Der Verschlussbalg 17 am rückwärtigen Ende des zweiten Teils 14 der Schubdüsenglocke 12 verfügt über eine Sollbruchstelle 17a, welche dazu vorgesehen ist, nach dem Ausfahren des zweiten Teils 14 der Schubdüsenglocke 12 in die Betriebsposition II aufzuplatzen und die Strahlöffnung 10b freizugeben. Der Verschlussbalg 17 wird nach dem Aufplatzen an der Sollbruchstelle 17a durch die austretenden heißen Brenngase nach Zündung des Raketentriebwerks 10 durch Verbrennen oder Abschmelzen völlig abgetrennt.

Zum Ausfahren des zweiten Teils 14 der Schubdüsenglocke 12 aus der in Figur 1a) gezeigten Stauposition I wird das im Inneren der Schubdüsenglocke 12 befindliche geschlossene Volumen 15 durch ein gasförmiges Fluid unter Druck gesetzt, wodurch dieses die Tendenz hat sich auszudehnen und den zweiten Teil 14 der Schubdüsenglocke 12 nach rückwärts auszufahren bis die in Figur 1b) gezeigte Betriebsposition II erreicht ist. Die Ausfahrbewegung wird dabei durch die Rückhalteeinrichtung 19 gebremst und gleichzeitig zentriert. Der zweite Teil 14 der Schubdüsenglocke 12 wird beim Erreichen der Betriebsposition II mittels der bereits früher genannten, nicht näher dargestellten Einrast- oder Verriegelungsvorrichtung eingerastet.

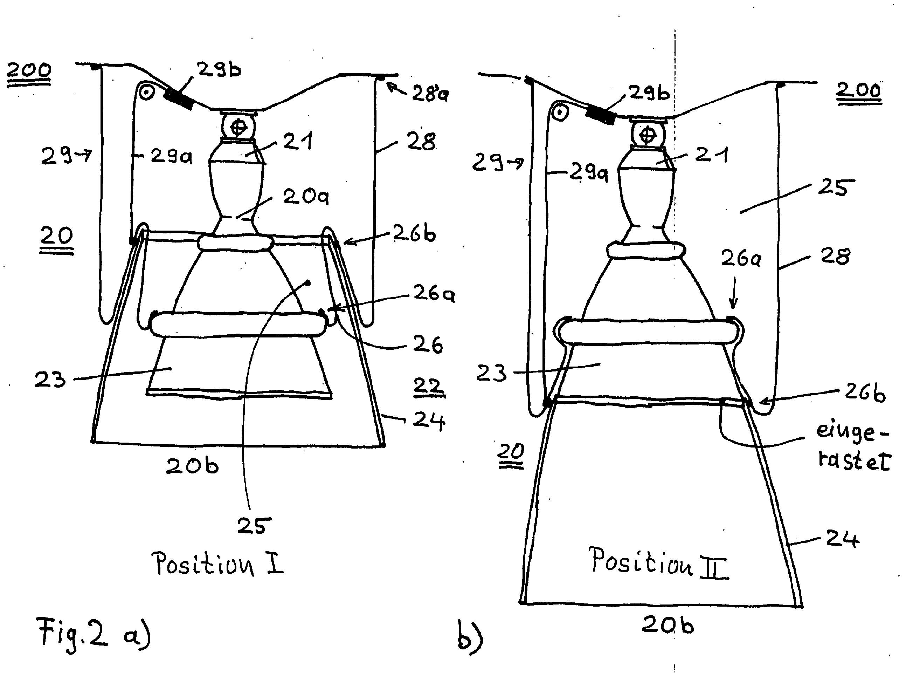

Bei dem in den Figuren 2a) und b) dargestellten zweiten Ausführungsbeispiel der Erfindung ist wiederum ein erster Rollbalg 26 als Bestandteil einer Rollbalganordnung vorgesehen, der einerseits mit einem Umfangsbereich 26a des ersten Teils 23 der Schubdüsenglocke 22 und andererseits mit einem Umfangsbereich 26b des zweiten Teils 14 der Schubdüsenglocke 12 verbunden ist, wobei sich der Umfangsbereich 26a an dem ersten Teil 23 der Schubdüsenglocke 22, an dem der erste Rollbalg 26 befestigt ist, nicht am rückwärtigen Ende des ersten Teils 23 der Schubdüsenglocke 22 befindet, sondern weiter vorne. Der Umfangsbereich 26b, an dem der erste Rollbalg 26 andererseits befestigt ist, befindet sich am vorderen Ende des zweiten Teils 24 der Schubdüsenglocke 22.

Weiterhin umfasst die Rollbalganordnung einen zweiten Rollbalg 28, der einerseits mit einem feststehenden Teil 28a des Luft- oder Raumfahrzeugs 200 und andererseits mit einem Umfangsbereich des zweiten Teils 24 der Schubdüsenglocke 22 verbunden ist, der im wesentlichen der gleiche Umfangsbereich 26b ist, mit dem auch der erste Rollbalg 26 verbunden ist. Der zweite Rollbalg 28 bildet eine bezüglich dem ersten Rollbalg 26 eine radial außerhalb liegende weitere Abdichtung für das von dem gasförmigen Fluid beaufschlagbare geschlossene Volumen 25, welches sich bei diesem Ausführungsbeispiel außerhalb der Schubdüsenglocke 22 befindet und zwischen dem ersten Rollbalg 26, dem zweiten Rollbalg 28 und dem rückwärtigen Ende des Luft- oder Raumfahrzeugs 200 begrenzt ist.

Wie bei dem in den Figuren 1a) und b) gezeigten ersten Ausführungsbeispiel ist auch bei dem zweiten Ausführungsbeispiel eine Rückhalteeinrichtung 29 vorgesehen, die zum Abbremsen der Bewegung beim Ausfahren des zweiten Teils 24 der Schubdüsenglocke 22 aus der Stauposition I in die Betriebsposition II dient und die ein oder mehrere sich zwischen dem zweiten Teil 24 der Schubdüsenglocke 12 und einem feststehenden Teil des Luft- oder Raumfahrzeugs 200 erstreckende Rückhaltekabel 29a und eine Kabelbremse 29b, mit der die Rückhaltekabel 29a gekoppelt sind, umfasst.

Zum Ausfahren des zweiten Teils 24 der Schubdüsenglocke 22 aus der in Figur 2a) dargestellten vorderen Stauposition I in die in Figur 2b) dargestellte hintere Betriebsposition II wird das zwischen dem ersten Rollbalgs 26 und dem zweiten Rollbalgs 28 liegende geschlossene Volumen 25 mit dem gasförmigen Fluid beaufschlagt, wodurch es die Tendenz hat sich zu vergrößern und der zweite Teil 24 der Schubdüsenglocke 22 in die Betriebsposition II ausgefahren wird. In der Betriebsposition II wird der zweite Teil 24 der Schubdüsenglocke 22 mittels der bereits genannten, nicht dargestellten Einrast- oder Verriegelungseinrichtung verriegelt.

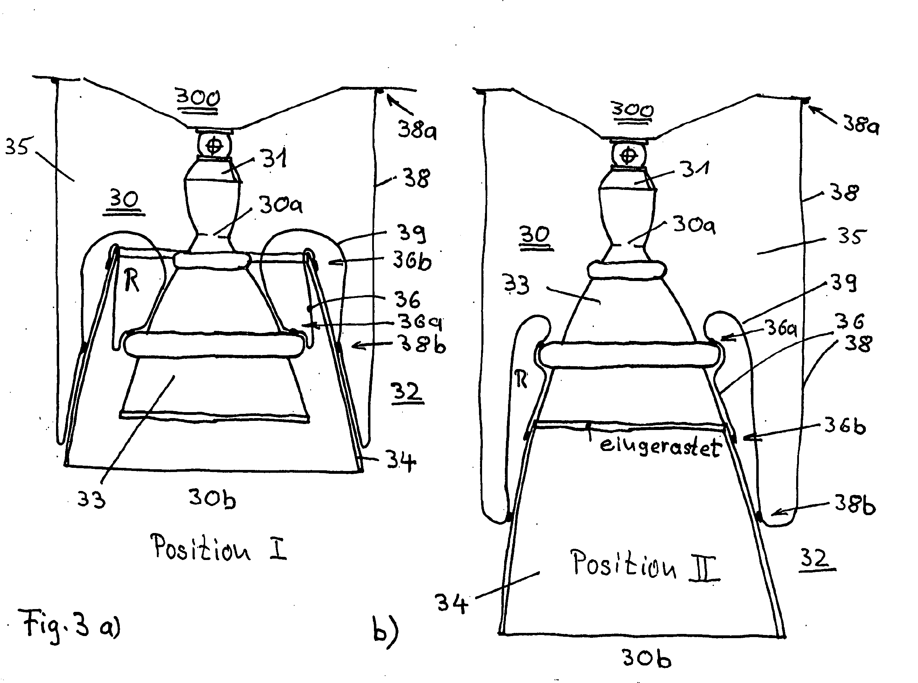

Bei dem in den Figuren 3a) und b) dargestellten dritten Ausführungsbeispiel sind wiederum ein erster Rollbalg 36, der einerseits an einem Verbindungsbereich 36a mit dem ersten Teil 33 der Schubdüsenglocke 32 und andererseits an einem Verbindungsbereich 36b mit dem zweiten Teil 34 der Schubdüsenglocke 32 verbunden ist, und ein zweiter Rollbalg 38, der einerseits mit einem feststehenden Teil 38a des Luft- oder Raumfahrzeugs 300 und andererseits mit einem Umfangsbereich 38b des zweiten Teils 34 der Schubdüsenglocke 32 verbunden ist, vorgesehen. Der Umfangsbereich 38b des zweiten Teils 34 der Schubdüsenglocke 32, mit dem der zweite Rollbalg 38 verbunden ist, ist bei diesem Ausführungsbeispiel ein anderer als der Umfangsbereich 36b, mit welchem der erste Rollbalg 36 verbunden ist und befindet sich radial außerhalb und rückwärts des letzteren.

Bei diesem dritten Ausführungsbeispiel ist eine Rückhalteeinrichtung 39 vorgesehen, die einen Rückhaltebalg 39 umfasst, der sich zwischen einem Umfangsbereich 36a des ersten Teils 33 der Schubdüsenglocke 32 und einem Umfangsbereich 38b des zweiten Teils 34 der Schubdüsenglocke 32 erstreckt und bezüglich dem ersten Rollbalg 36 vorne liegend angeordnet ist und zusammen mit dem ersten Rollbalg 36 ein weiteres mit einem gasförmigen Fluid beaufschlagbares geschlossenes Volumen R bildet. Bei dem dargestellten Ausführungsbeispiel ist, was jedoch nicht notwendig ist, der Rückhaltebalg 39 einerseits am ersten Teil 33 der Schubdüsenglocke 32 an dem gleichen Umfangsbereich 36a befestigt, mit dem auch der erste Rollbalg 36 verbunden ist, und an dem zweiten Teil 34 der Schubdüsenglocke 32 an dem gleichen Umfangsbereich 38b, mit dem auch der zweite Rollbalg 38 verbunden ist. Der Umfangsbereich 38b des zweiten Teils 34 des Schubdüsenglocke 32, an dem der Rückhaltebalg 39 festgelegt ist, befindet sich radial außerhalb des Umfangsbereichs 36b, mit dem der erste Rollbalg 36 verbunden ist. Das zwischen dem ersten Rollbalg 36 und dem Rückhaltebalg 39 begrenzte geschlossene Volumen R bewirkt bei Beaufschlagung mit dem gasförmigen Fluid unter Volumenvergrößerung ein Abbremsen der Bewegung beim Ausfahren des zweiten Teils 34 der Schubdüsenglocke 32 aus der Stauposition I in die Betriebsposition II. Die Beaufschlagung des geschlossenen Volumens R mit dem gasförmigen Fluid erfolgt vorzugsweise unabhängig von der Beaufschlagung des geschlossenen Volumens 25.

Zum Ausfahren des zweiten Teils 34 der Schubdüsenglocke 32 aus der in Figur 3a) dargestellten Stauposition I in die in Figur 3b) dargestellte Betriebsposition II wird das zwischen dem zweiten Rollbalg 38 und - hier über den dazwischenliegenden Rückhaltebalg 39 mittelbar - dem ersten Rollbalg 36 eingeschlossene Volumen 35 mit dem gasförmigen Fluid beaufschlagt, wodurch es die Tendenz hat, sich auszudehnen und dadurch den zweiten Teil 34 der Schubdüsenglocke 32 in die Betriebsposition II auszufahren. Beim Erreichen der Betriebsposition II wird der zweite Teil 34 der Schubdüsenglocke 32 durch die bereits mehrfach genannte, nicht dargestellte Einrast- oder Verriegelungseinrichtung verriegelt.

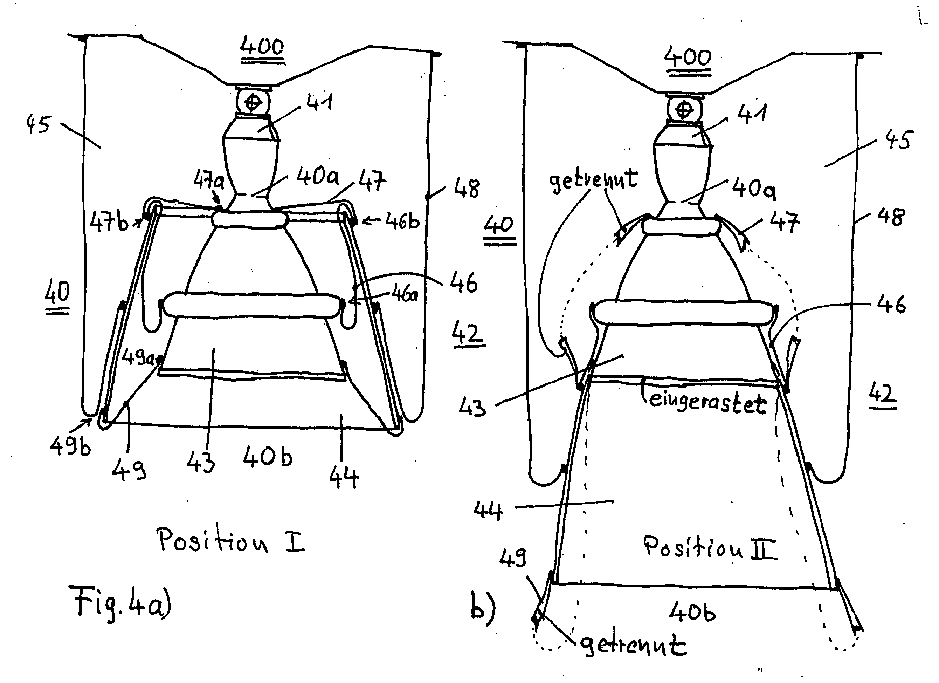

Bei dem in den Figuren 4a) und b) dargestellten vierten Ausführungsbeispiel der erfindungsgemäßen Schubdüsenglocke ist ähnlich wie bei dem in Figur 3a) und b) dargestellten dritten Ausführungsbeispiel ein erster Rollbalg 46 vorgesehen, der einerseits mit einem Umfangsbereich 46a des ersten Teils 43 der Schubdüsenglocke 42 und andererseits mit einem Umfangsbereich 46b des zweiten Teils 44 der Schubdüsenglocke 42 verbunden ist, und ein zweiter Rollbalg 48, der einerseits mit einem feststehenden Teil 48a des Luft- oder Raumfahrzeugs 400 und andererseits mit einem Umfangsbereich 48b des zweiten Teils 44 der Schubdüsenglocke 42 verbunden ist. Der erste Rollbalg 46 und der zweite Rollbalg 48 bilden wiederum ein außerhalb der Schubdüsenglocke 42 liegendes geschlossenes Volumen 45, das von dem gasförmigen Fluid beaufschlagbar ist.

Bei diesem vierten Ausführungsbeispiel ist eine Rückhalteeinrichtung 47, 49 vorgesehen, die einen sich zwischen einem vorderen Umfangsbereich 47a des ersten Teils 43 und einem vorderen Umfangsbereich 47b des zweiten Teils 44 der Schubdüsenglocke 42 erstreckenden Rückhalte- und Zentrierbalg 47 sowie einen sich zwischen einem hinteren Umfangsbereich 49a des ersten Teils 43 und einem hinteren Umfangsbereich 49b des zweiten Teils 44 der Schubdüsenglocke 42 erstreckenden Rückhalte- und Zentrierbalg 49 umfasst. Die dadurch gebildete Rückhalteeinrichtung 47, 49 dient einerseits zum Abbremsen der Bewegung beim Ausfahren des zweiten Teils 44 der Schubdüsenglocke 42 aus der in Figur 4a) gezeigten Stauposition I in die in Figur 4b) gezeigte Betriebsposition II und gleichzeitig zum Zentrieren des zweiten Teils 44 der Schubdüsenglocke 42 bei dieser Bewegung.

Zum Ausfahren des zweiten Rollbalgs 48 wird das eingeschlossene Volumen 45 von dem gasförmigen Fluid beaufschlagt und hat damit die Tendenz, den zweiten Teil 44 der Schubdüsenglocke 42 in die Betriebsposition II auszufahren. Im Laufe dieser Bewegung werden die Rückhalte- und Zentrierbälge 47, 49 zunehmend unter Zug gesetzt, wobei sie an einer dafür vorgesehenen Sollbruchstelle getrennt werden. Beim Erreichen der in Figur 4b) gezeigten Betriebsposition II wird der zweite Teil 44 der Schubdüsenglocke 42 mittels der genannten, nicht dargestellten Einrast- oder Verriegelungseinrichtung verriegelt.

## Patentansprüche

1. Raketentriebwerk eines Luft- oder Raumfahrzeugs mit einer ausfahrbaren Schubdüsenglocke, welche einen am Motor (11; 21; 31; 41) des Raketentriebwerks (10; 20; 30; 40) fest angeordneten ersten Teil (13; 23; 33; 43) mit kleinerem Durchmesser und einen gegenüber dem ersten Teil (13; 23; 33; 43) beweglich angeordneten zweiten Teil (14; 24; 34; 44) mit größerem Durchmesser umfasst, wobei der zweite Teil (14; 24; 34; 44) in einer vorderen Stauposition (I) den ersten Teil (13; 23; 33; 43) umgebend näher am Raketenmotor (11; 21; 31; 41) befindlich ist und in einer hinteren Betriebsposition (II) den ersten Teil (13; 23; 33; 43) fortsetzend weiter vom Raketenmotor (11; 21; 31; 41) weg angeordnet ist, und mit einem durch ein gasförmiges Fluid beaufschlagbaren, geschlossenen Volumen (15; 25; 35; 45), welches bei Beaufschlagung mit dem gasförmigen Fluid unter Volumenvergrößerung ein Ausfahren des zweiten Teils (14; 24; 34; 44) der Schubdüsenglocke (12; 22; 32; 42) aus der Stauposition (I) in die Betriebsposition (II) bewirkt, **dadurch gekennzeichnet, dass** das durch das gasförmige Fluid beaufschlagbare geschlossene Volumen (15; 25; 35; 45) zumindest teilweise durch eine zwischen dem beweglich angeordneten zweiten Teil (14; 24; 34; 44) der Schubdüsenglocke (12; 22; 32; 42) und einem feststehenden Teil des Raketentriebwerks (10; 20; 30; 40) gekoppelte verformbare Rollbalganordnung (16; 26, 28; 36, 38, 39; 46, 48) gebildet ist.

2. Raketentriebwerk nach Anspruch 1, **dadurch gekennzeichnet, dass** die Rollbalganordnung (16; 26, 28; 36, 38, 39; 46, 48) mindestens einen in wesentlichen rotationssymmetrisch bezüglich der Längsachse des Raketentriebwerks (10; 20; 30; 40) ausgebildeten Rollbalg (16; 26, 28; 36, 38, 39; 46, 48) umfasst.

3. Raketentriebwerk nach Anspruch 2, **dadurch gekennzeichnet, dass** der mindestens eine Rollbalg (16; 26, 28; 36, 38, 39; 46, 48) über den ganzen Umfang der Schubdüsenglocke (12; 22; 32; 42) umlaufend ausgebildet ist.

4. Raketentriebwerk nach einem der Ansprüche 1 bis 3, **dadurch gekennzeichnet, dass** die Rollbalganordnung (16; 26, 28; 36, 38, 39; 46, 48) einen ersten Rollbalg (16; 26, 28; 36, 38, 39; 46, 48) umfasst, der eine Abdichtung für das gasförmige Fluid bildend einerseits mit einem Umfangsbereich (16a; 26a; 36a; 46a) des ersten Teils (13; 23; 33; 43) der Schubdüsenglocke (12; 22; 32; 42) und andererseits mit einem Umfangsbereich (16b; 26b; 36b; 46b) des zweiten Teils (14; 24; 34; 44) der Schubdüsenglocke (12; 22; 32; 42) verbunden ist, sowie einen zweiten Balg (17; 28; 38; 48), der eine weitere Abdichtung des von dem ersten Rollbalg (16; 26; 36; 46) begrenzten Volumens (15; 25; 35; 45) für das gasförmige Fluid bildet.

5. Raketentriebwerk nach Anspruch 4, **dadurch gekennzeichnet, dass** der zweite Balg ein Verschlussbalg (17) ist, der die Strahlöffnung (10b) des zweiten Teils (14) der Schubdüsenglocke (12) verschließt und zusammen mit dem ersten Rollbalg (16) und dem ersten und zweiten Teil (13, 14) der Schubdüsenglocke (12) das von dem gasförmigen Fluid beaufschlagbare geschlossene Volumen (15) innerhalb der Schubdüsenglocke (12) begrenzt.

6. Raketentriebwerk nach Anspruch 5, **dadurch gekennzeichnet, dass** der Umfangsbereich (16a) des ersten Teils (13) der Schubdüsenglocke (12), mit dem der erste Rollbalg (16) einerseits verbunden ist, am rückwärtigen Ende des ersten Teils (13) der Schubdüsenglocke (12) vorgesehen ist, und dass der Umfangsbereich (16b) des zweiten Teils (14) der Schubdüsenglocke (12), mit dem der erste Rollbalg (16) andererseits verbunden ist, am vorderen Ende des zweiten Teils (14) der Schubdüsenglocke (12) vorgesehen ist.

7. Raketentriebwerk nach Anspruch 5 oder 6, **dadurch gekennzeichnet, dass** der Verschlussbalg (17) eine Sollbruchstelle (17a) aufweist, an der der Verschlussbalg (17) nach dem Ausfahren des zweiten Teils (14) der Schubdüsenglocke (12) in die Betriebsposition (II) aufplatzt, um die Strahlöffnung (10b) freizugeben.

8. Raketentriebwerk nach Anspruch 4, **dadurch gekennzeichnet, dass** der zweite Balg (28; 38; 48) ein zweiter Rollbalg ist, der einerseits mit einem feststehenden Teil (28a; 38a; 48) des Luft- oder Raumfahrzeugs (200; 300; 400) und andererseits mit einem Umfangsbereich (26b; 36b; 48b) des zweiten Teils (24; 34; 44) der Schubdüsenglocke (22; 32; 42) verbunden ist und eine bezüglich dem ersten Rollbalg (26; 36; 46) zumindest teilweise radial außerhalb liegende weitere Abdichtung für das gasförmige Fluid bildet, wobei das von dem gasförmigen Fluid beaufschlagbare geschlossene Volumen (25; 35; 45) sich zumindest teilweise außerhalb der Schubdüsenglocke (22; 32; 42) befindet und zwischen dem ersten Rollbalg (26; 36; 46) und dem zweiten Rollbalg (28; 38; 48) begrenzt ist.

9. Raketentriebwerk nach Anspruch 8, **dadurch gekennzeichnet, dass** der Umfangsbereich (26b) des zweiten Teils (24) der Schubdüsenglocke (22), mit dem der zweite Rollbalg (28) verbunden ist, im wesentlichen der gleiche Umfangsbereich (26b) des zweiten Teils (24) der Schubdüsenglocke (22) ist, mit dem auch der erste Rollbalg (26) verbunden ist.

10. Raketentriebwerk nach Anspruch 8, **dadurch gekennzeichnet, dass** der Umfangsbereich (38b; 48b) des zweiten Teils (34; 44) der Schubdüsenglocke (32; 42), mit dem der zweite Rollbalg (38; 48) verbunden ist, ein anderer als der Umfangsbereich (36b; 46b) ist, mit welchem der erste Rollbalg (36; 46) verbunden ist, und sich radial außerhalb und rückwärts des letzteren befindet.

11. Raketentriebwerk nach einem der Ansprüche 1 bis 10, **dadurch gekennzeichnet, dass** eine Rückhalteeinrichtung (19; 29; 39; 47, 49) zum Abbremsen der Bewegung beim Ausfahren des zweiten Teils (14; 24; 34; 44) der Schubdüsenglocke (12; 22; 32; 42) aus der Stauposition (I) in die Betriebsposition (II) vorgesehen ist.

12. Raketentriebwerk nach Anspruch 11, **dadurch gekennzeichnet, dass** die Rückhalteeinrichtung (47, 49) gleichzeitig zum Zentrieren des zweiten Teils (44) der Schubdüsenglocke (42) beim Ausfahren aus der Stauposition (I) in die Betriebsposition (II) vorgesehen ist.

13. Raketentriebwerk nach Anspruch 11 oder 12, **dadurch gekennzeichnet, dass** die Rückhalteeinrichtung (19; 29) ein oder mehrere sich zwischen dem zweiten Teil (14; 24) der Schubdüsenglocke (12; 22) und einem feststehenden Teil des Luft- oder Raumfahrzeugs (100; 200) erstreckende und mit einer Kabelbremse (19b; 29b) gekoppelte Rückhaltekabel (19a; 29a) umfasst.

14. Raketentriebwerk nach Anspruch 11, 12 oder 13, **dadurch gekennzeichnet, dass** die Rückhalteeinrichtung einen Rückhaltebalg (39) umfasst, der sich zwischen einem Umfangsbereich (36a) des ersten Teils (32) der Schubdüsenglocke (32) und einem Umfangsbereich (38b) des zweiten Teils (34) der Schubdüsenglocke (32) erstreckt und bezüglich dem ersten Rollbalg (36) vorne liegend angeordnet ist und zusammen mit dem ersten Rollbalg (36) ein weiteres mit einem gasförmigen Fluid beaufschlagbares geschlossenes Volumen (R) bildet, das bei Beaufschlagung mit dem gasförmigen Fluid unter Volumenvergrößerung ein Abbremsen der Bewegung beim Ausfahren des zweiten Teils (34) der Schubdüsenglocke (32) aus der Stauposition (I) in die Betriebsposition (II) bewirkt.

15. Raketentriebwerk nach Anspruch 14, **dadurch gekennzeichnet, dass** der Rückhaltebalg (39) an einem Umfangsbereich (38b) des zweiten Teils (34) der Schubdüsenglocke (32) festgelegt ist, der sich radial außerhalb des Umfangsbereich (36b) befindet, mit dem der erste Rollbalg (36) verbunden ist.

16. Raketentriebwerk nach Anspruch 14 oder 15, **dadurch gekennzeichnet, dass** der Rückhaltebalg (39) zwischen dem ersten Rollbalg (36) und dem zweiten Rollbalg (38) angeordnet ist.

17. Raketentriebwerk nach Anspruch 11, 12 oder 13, **dadurch gekennzeichnet, dass** die Rückhalteeinrichtung (47, 49) einen sich zwischen einem vorderen Umfangsbereich (47a) des ersten Teils (43) und einem vorderen Umfangsbereich (47b) des zweiten Teils (44) der Schubdüsenglocke (42) erstreckenden Rückhalte- und Zentrierbalg (47) umfasst.

18. Raketentriebwerk nach Anspruch 11, 12, 13 oder 17, **dadurch gekennzeichnet, dass** die Rückhalteeinrichtung (47, 49) einen sich zwischen einem hinteren Umfangsbereich (49a) des ersten Teils (43) und einem hinteren Umfangsbereich (49b) des zweiten Teils (44) der Schubdüsenglocke (42) erstreckenden Rückhalte- und Zentrierbalg (49) umfasst.

19. Raketentriebwerk nach Anspruch 17 oder 18, **dadurch gekennzeichnet, dass** der Rückhalte- und Zentrierbalg (47, 49) so ausgebildet ist, dass er beim Ausfahren des zweiten Teils (44) der Schubdüsenglocke (42), spätestens nach dem Erreichen der Betriebsposition (II) des zweiten Teils (44) aufplatzt oder getrennt wird, insbesondere durch eine Sollbruchstelle.

## Claims

1. Rocket propulsion unit of an aircraft or spacecraft with an extensible thrust nozzle cone, which comprises a first part (13; 23; 33; 43) of a smaller diameter, which is disposed in a fixed manner on the motor (11; 21; 31; 41) of the rocket propulsion unit (10; 20; 30; 40), and a second part (14; 24; 34; 44) of a larger diameter, which is disposed movably relative to the first part (13; 23; 33; 43), wherein the second part (14; 24; 34; 44) in a front stowage position (I) surrounding the first part (13; 23; 33; 43) is situated closer to the rocket motor (11; 21; 31; 41) and in a rear operating position (II) as a continuation of the first part (13; 23; 33; 43) is disposed further away from the rocket motor (11; 21; 31; 41), and with a closed volume (15; 25; 35; 45), which is loadable with a gaseous fluid and which, upon loading with the gaseous fluid, with a volume enlargement brings about an extension of the second part (14; 24; 34; 44) of the thrust nozzle cone (12; 22; 32; 42) out of the stowage position (I) into the operating position (II), **characterized in that** the closed volume (15; 25; 35; 45) loadable with the gaseous fluid is formed at least partially by a deformable rolling bellows arrangement (16; 26, 28; 36, 38, 39; 46, 48), which is coupled between the movably disposed second part (14; 24; 34; 44) of the thrust nozzle cone (12; 22; 32; 42) and a fixed part of the rocket propulsion unit (10; 20; 30; 40).

2. Rocket propulsion unit according to claim 1, **characterized in that** the rolling bellows arrangement (16; 26, 28; 36, 38, 39; 46, 48) comprises at least one set of rolling bellows (16; 26, 28; 36, 38, 39, 46, 48), which is designed substantially rotationally symmetrically relative to the longitudinal axis of the rocket propulsion unit (10; 20; 30; 40).

3. Rocket propulsion unit according to claim 2, **characterized in that** the at least one set of rolling bellows (16; 26, 28; 36, 38, 39; 46, 48) is designed to extend around the entire circumference of the thrust nozzle cone (12; 22; 32; 42).

4. Rocket propulsion unit according to one of claims 1 to 3, **characterized in that** the rolling bellows arrangement (16; 26, 28; 36, 38, 39; 46, 48) comprises a first set of rolling bellows (16; 26; 36; 46), which while forming a seal for the gaseous fluid is connected on the one hand to a circumferential region (16a; 26a; 36a; 46a) of the first part (13; 23; 33; 43) of the thrust nozzle cone (12; 22; 32; 42) and on the other hand to a circumferential region (16b; 26b; 36b; 46b) of the second part (14; 24; 34; 44) of the thrust nozzle cone (12; 22; 32; 42), as well as a second set of bellows (17; 28; 38; 48), which forms a further seal of the volume (15; 25; 35; 45) for the gaseous fluid that is delimited by the first set of rolling bellows (16; 26; 36; 46).

5. Rocket propulsion unit according to claim 4, **characterized in that** the second set of bellows are closing bellows (17), which close the jet aperture (10b) of the second part (14) of the thrust nozzle cone (12) and together with the first set of rolling bellows (16) and the first and second part (13, 14) of the thrust nozzle cone (12) delimit the closed volume (15) loadable with the gaseous fluid inside the thrust nozzle cone (12).

6. Rocket propulsion unit according to claim 5, **characterized in that** the circumferential region (16a) of the first part (13) of the thrust nozzle cone (12), to which the first set of rolling bellows (16) is connected on the one hand, is provided at the rear end of the first part (13) of the thrust nozzle cone (12), and that the circumferential region (16b) of the second part (14) of the thrust nozzle cone (12), to which the first set of rolling bellows (16) is connected on the other hand, is provided at the front end of the second part (14) of the thrust nozzle cone (12).

7. Rocket propulsion unit according to claim 5 or 6, **characterized in that** the closing bellows (17) have a predetermined breaking point (17a), at which the closing bellows (17) after extension of the second part (14) of the thrust nozzle cone (12) into the operating position (II) burst open in order to release the jet aperture (10b).

8. Rocket propulsion unit according to claim 4, **characterized in that** the second set of bellows (28; 38; 48) is a second set of rolling bellows, which is connected on the one hand to a fixed part (28a; 38a; 48a) of the aircraft or spacecraft (200; 300; 400) and on the other hand to a circumferential region (26b; 36b; 48b) of the second part (24; 34; 44) of the thrust nozzle cone (22; 32; 42) and forms a further seal for the gaseous fluid that lies at least partially radially outside of the first set of rolling bellows (26; 36; 46), wherein the closed volume (25; 35; 45) loadable with the gaseous fluid is situated at least partially outside of the thrust nozzle cone (22; 32; 42) and is delimited between the first set of rolling bellows (26; 36; 46) and the second set of rolling bellows (28; 38; 48).

9. Rocket propulsion unit according to claim 8, **characterized in that** the circumferential region (26b) of the second part (24) of the thrust nozzle cone (22), to which the second set of rolling bellows (28) is connected, is substantially the same circumferential region (26b) of the second part (24) of the thrust nozzle cone (22), to which the first set of rolling bellows (26) is also connected.

10. Rocket propulsion unit according to claim 8, **characterized in that** the circumferential region (38b; 48b) of the second part (34; 44) of the thrust nozzle cone (32; 42), to which the second set of rolling bellows (38; 48) is connected, differs from the circumferential region (36b; 46b), to which the first set of rolling bellows (36; 46) is connected, and is situated radially outside and rearwards of the latter.

11. Rocket propulsion unit according to one of claims 1 to 10, **characterized in that** a retaining device (19; 29; 39; 47, 49) is provided for braking the movement during extension of the second part (14; 24; 34; 44) of the thrust nozzle cone (12; 22; 32; 42) out of the stowage position (I) into the operating position (II).

12. Rocket propulsion unit according to claim 11, **characterized in that** the retaining device (47, 49) is provided simultaneously for centring the second part (44) of the thrust nozzle cone (42) during extension out of the stowage position (I) into the operating position (II).

13. Rocket propulsion unit according to claim 11 or 12, **characterized in that** the retaining device (19; 29) comprises one or more retaining cables (19a; 29a), which extend between the second part (14; 24) of the thrust nozzle cone (12; 22) and a fixed part of the aircraft or spacecraft (100; 200) and are coupled to a cable brake (19b; 29b).

14. Rocket propulsion unit according to claim 11, 12 or 13, **characterized in that** the retaining device comprises retaining bellows (39), which extend between a circumferential region (36a) of the first part (33) of the thrust nozzle cone (32) and a circumferential region (38b) of the second part (34) of the thrust nozzle cone (32) and are disposed in front of the first set of rolling bellows (36) and together with the first set of rolling bellows (36) form a further closed volume (R), which is loadable with a gaseous fluid and which, upon loading with the gaseous fluid, with a volume enlargement brings about a braking of the movement during the extension of the second part (34) of the thrust nozzle cone (32) out of the stowage position (I) into the operating position (II).

15. Rocket propulsion unit according to claim 14, **characterized in that** the retaining bellows (39) are fastened to a circumferential region (38b) of the second part (34) of the thrust nozzle cone (32) that is situated radially outside of the circumferential region (36b) to which the first set of rolling bellows (36) is connected.

16. Rocket propulsion unit according to claim 14 or 15, **characterized in that** the retaining bellows (39) are disposed between the first set of rolling bellows (36) and the second set of rolling bellows (38).

17. Rocket propulsion unit according to claim 11, 12 or 13, **characterized in that** the retaining device (47, 49) comprises retaining and centring bellows (47), which extend between a front circumferential region (47a) of the first part (43) and a front circumferential region (47b) of the second part (44) of the thrust nozzle cone (42).

18. Rocket propulsion unit according to claim 11, 12, 13 or 17, **characterized in that** the retaining device (47, 49) comprises retaining and centring bellows (49), which extend between a rear circumferential region (49a) of the first part (43) and a rear circumferential region (49b) of the second part (44) of the thrust nozzle cone (42).

19. Rocket propulsion unit according to claim 17 or 18, **characterized in that** the retaining and centring bellows (47, 49) are designed in such a way that during extension of the second part (44) of the thrust nozzle cone (42), at the latest after attainment of the operating position (II) of the second part (44), they burst open or are disconnected, in particular by means of a predetermined breaking point.

## Revendications

1. Moteur de fusée d'un aéronef ou d'un vaisseau spatial comprenant une tuyère d'éjection déployable qui comporte une première partie (13 ; 23 ; 33 ; 43) fixé sur le moteur (11 ; 21 ; 31 ; 41) du moteur de fusée (10 ; 20 ; 30 ; 40) et d'un diamètre plus petit et une deuxième partie (14 ; 24 ; 34 ; 44) d'un diamètre plus grand, mobile par rapport à la première partie (13 ; 23 ; 33 ; 43), la deuxième partie (14 ; 24 ; 34 ; 44) entourant dans une position d'arrimage avant (I), la première partie (13 ; 23 ; 33 ; 43) plus près du moteur de fusée (11 ; 21 ; 31 ; 41) alors que dans une position de service arrière (II), elle prolonge la première partie (13 ; 23 ; 33 ; 43), plus loin du moteur de fusée (11 ; 21 ; 31 ; 41), et dont un volume clos (15 ; 25 ; 35 ; 45) peut être chargé par un fluide gazeux, et en cas de charge avec un fluide gazeux provoque par augmentation du volume, une sortie de la deuxième partie (14 ; 24 ; 34 ; 44) de la tuyère en forme de cloche (12 ; 22 ; 32 ; 42) de la position d'arrimage (I) vers la position de service (II),
**caractérisé en ce que**
le volume clos (15 ; 25 ; 35 ; 45), pouvant être chargé en fluide gazeux, est formé, au moins en partie, par un dispositif de soufflet déroulant (16 ; 26, 28 ; 36, 38, 39 ; 46, 48) déformable couplé entre la deuxième partie mobile (14 ; 24 ; 34 ; 44) de la tuyère d'éjection (12 ; 22 ; 32 ; 42) et une partie fixe du moteur de fusée (10 ; 20 ; 30 ; 40).

2. Moteur de fusée selon la revendication 1,
**caractérisé en ce que**
le dispositif de soufflet déroulant (16 ; 26, 28 ; 36, 38, 39 ; 46, 48) comporte au moins un soufflet déroulant (16 ; 26, 28 ; 36, 38, 39 ; 46, 48) essentiellement symétrique en rotation par rapport à l'axe longitudinal du moteur de fusée (10 ; 20 ; 30 ; 40).

3. Moteur de fusée selon la revendication 2,
**caractérisé en ce que**
au moins la soufflet déroulant (16 ; 26, 28 ; 36, 38, 39 ; 46, 48) entoure toute la périphérie de la tuyère d'éjection (12 ; 22 ; 32 ; 42).

4. Moteur de fusée selon l'une quelconque des revendications 1 à 3,
**caractérisé en ce que**
le dispositif de soufflet déroulant (16 ; 26 ; 28 ; 36 ; 46) comporte un premier soufflet déroulant (16 ; 26 ; 36 ; 46) relié avec étanchéité pour le fluide gazeux, d'une part avec une zone périphérique (16a ; 26a ; 36a ; 46a) de la première partie (13 ; 23 ; 33 ; 43) de la tuyère d'éjection (12 ; 22 ; 32 ;42) et, d'autre part, avec une zone périphérique (16b ; 26b ; 36b ; 46b) de la deuxième partie (14 ; 24 ; 34 ; 44) de la tuyère d'éjection (12 ; 22 ; 32 ; 42), ainsi qu'un deuxième soufflet (17 ; 28 ; 38 ; 48) qui forme une autre étanchéité du volume (15 ; 25 ; 35 ; 45) délimité par le premier soufflet déroulant (16 ; 26 ; 36 ; 46) pour le fluide gazeux.

5. Moteur de fusée selon la revendication 4,
**caractérisé en ce que**
le deuxième soufflet est un soufflet de fermeture (17) qui ferme l'ouverture de faisceau (10b) de la deuxième partie (14) de la tuyère d'éjection (12) et limite, avec le premier soufflet déroulant (16) et les première et deuxième parties (13, 14) de la tuyère d'éjection (12) le volume clos (15) pouvant être chargé par le fluide gazeux à l'intérieur de la tuyère d'éjection (12).

6. Moteur de fusée selon la revendication 5,
**caractérisé en ce que**
la zone périphérique (16a) de la première partie (13) de la tuyère d'éjection (12), à laquelle la première soufflet déroulant (16) est reliée d'une part, est prévue sur la partie arrière de la première partie (13) de la tuyère d'éjection (12), et la zone périphérique (16b) de la deuxième partie (14) de la tuyère d'éjection (12) est relié au premier soufflet déroulant (16) d'autre part, est prévue sur l'extrémité avant de la deuxième partie (14) de la tuyère d'éjection (12).

7. Moteur de fusée selon la revendication 5 ou 6,
**caractérisé en ce que**
le soufflet de fermeture (17) présente un point de rupture théorique (17a) sur lequel le soufflet de fermeture (17) vient éclater après la sortie de la deuxième partie (14) de la tuyère d'éjection (12) en position de service (II) pour dégager l'ouverture de jet (10b).

8. Moteur de fusée selon la revendication 4,
**caractérisé en ce que**
le deuxième soufflet (28 ; 38 ; 48) est un deuxième soufflet déroulant relie, d'une part, à une partie fixe (28a ; 38a ; 48a) de l'aéronef ou du vaisseau spatial (200 ; 300 ; 400) et, d'autre part, à une zone périphérique (26b ; 36b ; 48b) de la deuxième partie (24 ; 34 ; 44) de la tuyère d'éjection (22 ; 32 ; 42) et forme une autre étanchéité pour le fluide gazeux se trouvant au moins en partie radialement à l'extérieur, le volume clos (25 ; 35 ; 45) pouvant être chargé en fluide gazeux, se trouvant au moins en partie à l'extérieur de la tuyère d'éjection (22 ; 32 ; 42) en étant limité entre le première soufflet déroulant (26 ; 36 ; 46) et le deuxième soufflet déroulant (28 ; 38 ; 48).

9. Moteur de fusée selon la revendication 8,
**caractérisé en ce que**
la zone périphérique (26b) de la deuxième partie (24) de la tuyère d'éjection (22), à laquelle est relié le deuxième soufflet (28), est essentiellement la même zone périphérique (26b) de la deuxième partie (24) de la tuyère d'éjection (22) également reliée au premier soufflet déroulant (26).

10. Moteur de fusée selon la revendication 8,
**caractérisé en ce que**
la zone périphérique (38b ; 48b) de la deuxième partie (34 ; 44) de la tuyère d'éjection (32 ; 42), à laquelle la deuxième soufflet déroulant (38 ; 48) est reliée, est différente de la zone périphérique (36b ; 46b) à laquelle la première soufflet déroulant (36 ; 46) est reliée, et se trouve radialement à l'extérieur et à l'arrière de cette dernière.

11. Moteur de fusée selon l'une quelconque des revendications 1 à 10,
**caractérisé en ce qu'**
un dispositif de retenue (19 ; 29 ; 39 ; 47, 49) est prévu pour freiner le mouvement lorsque la deuxième partie (14 ; 24 ; 34 ; 44) de la tuyère d'éjection (12 ; 22 ; 32 ; 42) quitte la position d'arrimage (I) pour se mettre en position de service (II).

12. Moteur de fusée selon la revendication 11,
**caractérisé en ce que**
le dispositif de retenue (47, 49) sert en même temps à centrer la deuxième partie (44) de la tuyère d'éjection (42) lorsqu'elle quitte la position d'arrimage (I) pour se mettre en position de service (II).

13. Moteur de fusée selon la revendication 11 ou 12,
**caractérisé en ce que**
le dispositif de retenue (19 ; 29) comporte un ou plusieurs câbles de retenue (19a ; 29a) s'étendant entre la deuxième partie (14 ; 24) de la tuyère d'éjection (12 ; 22) et une partie fixe de l'aéronef ou du vaisseau spatial (100 ; 200) et couplés à un frein de câble (19b ; 29b).

14. Moteur de fusée selon la revendication 11, 12 ou 13,
**caractérisé en ce que**
le dispositif de retenue comporte une soufflet de retenue (39) qui s'étend entre une zone périphérique (36a) de la première partie (33) de la tuyère d'éjection (32) et une zone périphérique (38b) de la deuxième partie (34) de la tuyère d'éjection (32) et qui disposé à plat devant le premier soufflet déroulant (36) forme avec ce premier soufflet (36), un autre volume alors (R) pouvant être chargé par un fluide gazeux, lequel volume, du fait de son amplification, lors de la charge en fluide gazeux, provoque un freinage du mouvement lorsque la deuxième partie (34) de la tuyère d'éjection (32) quitte la position d'arrimage (I) pour se mettre en position de service (II).

15. Moteur de fusée selon la revendication 14,
**caractérisé en ce que**
le soufflet de retenue (39) est fixé à une zone périphérique (38b) de la deuxième partie (34) de la tuyère d'éjection (32), se trouvant radialement à l'extérieur de la zone périphérique (36b) reliée au premier soufflet déroulant (36).

16. Moteur de fusée selon la revendication 14 ou 15,
**caractérisé en ce que**
le soufflet de retenue (39) est installé entre le premier (36) et le deuxième soufflet déroulant (38).

17. Moteur de fusée selon la revendication 11, 12 ou 13,
**caractérisé en ce que**
le dispositif de retenue (47, 49) comporte en soufflet de retenue et de centrage (47) s'étendant entre une zone périphérique avant (47a) de la première partie (43) et une zone périphérique avant (47b) de la deuxième partie (44) de la tuyère d'éjection (42).

18. Moteur de fusée selon la revendication 11, 12, 13 ou 17,
**caractérisé en ce que**
le dispositif de retenue (47, 49) comporte le soufflet de retenue et de centrage (49) s'étendant entre une zone périphérique arrière (49a) de la première partie (43) et une zone périphérique arrière (49b) de la deuxième partie (44) de la tuyère d'éjection (42).

19. Moteur de fusée selon la revendication 17 ou 18,
**caractérisé en ce que**
le soufflet de retenue et de centrage (47, 49) est conçu de manière à éclater ou à être séparé, en particulier par un point de rupture théorique, lors de la sortie de la deuxième partie (44) de la tuyère d'éjection (42), au plus tard lorsque la deuxième partie (44) a atteint la position de service (II).
